# EUROPÄISCHE PATENTANMELDUNG

(11) **EP 2 610 806 A1**
(43) Veröffentlichungstag der Anmeldung: **03.07.2013**
(21) Anmeldenummer: 12199159.0
(22) Anmeldetag: 21.12.2012
(51) Int. Cl.: G06Q 30/02, B60L 11/18

(54) **Ladestation zur Bereitstellung elektrischer Energie für Fahrzeuge und Verfahren zum Betrieb der Ladestation**

(30) Priorität: 29.12.2011 DE 102011122498
(71) Anmelder: Elektro-Bauelemente GmbH, 44536 Lünen (DE)
(72) Erfinder: Kachouh, Checrallah, 44227 Dortmund (DE)
(74) Vertreter: Hansen, Jochen

(57) **Zusammenfassung**

Die Erfindung betrifft ein Verfahren zum Betreiben einer elektrische Energie für elektrisch betreibbare Fahrzeuge bereitstellenden Ladestation, wobei zur Abrechnung eines Ladevorgangs gegenüber einem Nutzer der Ladestation eine mit Hilfe einer Energieerfassungseinheit ermittelte, zu Beginn des Ladevorgangs an der Ladestation bisher bereitgestellte und über ein Anzeigemodul der Energieerfassungseinheit angezeigte erste Energiemenge (Anfangszählerstand) und eine bei Beendigung des Ladevorgangs an der Ladestation insgesamt bereitgestellte, in analoger Weise ermittelte und angezeigte zweite Energiemenge (Endzählerstand) in Anrechnung gebracht werden, wobei bei Beginn des Ladevorgangs von der Ladestation eine Energiemengenabfragenachricht mit einer Nutzerkennung des Nutzers an eine der Ladestation zugeordnete Servicestation gesendet wird und dann von der Servicestation eine erste Statusnachricht mit der bei Beginn des Ladevorgangs von der Ladestation bereitgestellten Energiemenge (Anfangszählerstand) an den Nutzer gesendet wird.

## Beschreibung

Die Erfindung betrifft ein Verfahren zum Betreiben einer elektrische Energie für elektrisch betreibbare Fahrzeuge bereitstellenden Ladestation, wobei zur Abrechnung eines Ladevorgangs gegenüber einem Nutzer der Ladestation eine mit Hilfe einer Energieerfassungseinheit ermittelte, zu Beginn des Ladevorgangs an der Ladestation bisher bereitgestellte und über ein Anzeigemodul der Energieerfassungseinheit angezeigte erste Energiemenge (Anfangszählerstand) und eine bei Beendigung des Ladevorgangs an der Ladestation insgesamt bereitgestellte, in analoger Weise ermittelte und angezeigte zweite Energiemenge (Endzählerstand) in Anrechnung gebracht werden.

Ferner betrifft die Erfindung eine Ladestation zur Bereitstellung elektrischer Energie für elektrisch betreibbare Fahrzeuge enthaltend eine Energieerfassungseinheit zum Erfassen einer bisher über die Ladestation bereitgestellten Energiemenge mit einem Anzeigemodul zur Anzeige der bisher bereitgestellten Energiemenge, enthaltend eine Sendeeinheit zum Senden von Daten an eine Servicestation und enthaltend eine mit der Energieerfassungseinheit und der Sendeeinheit zusammenwirkende Steuereinheit zum Durchführen und Koordinieren des Ladevorgangs, wobei der Steuereinheit weiter eine Identifikationseinheit zum Identifizieren eines Nutzers der Ladestation anhand einer Nutzerkennung und eine Bedieneinheit zum Starten und/oder Beenden eines Ladevorgangs zugeordnet sind.

Allgemein bekannt ist, die über eine Ladestation für elektrisch betreibbare Fahrzeuge in einen Energiespeicher des Fahrzeugs eingespeiste Energiemenge mittels einer in die Ladestation integrierten Energieerfassungseinheit zu ermitteln und dem Nutzer in Rechnung zu stellen. Üblicherweise wird die Energiemenge in Kilowattstunden (kWh) bestimmt. Die Energieerfassungseinheit kann hierbei ein Anzeigemodul aufweisen, über das die bisher an der Ladestation bereitgestellte Energiemenge dem Nutzer fortlaufend angezeigt wird. Der Nutzer erhält hierdurch die Möglichkeit, die zu Beginn des Ladevorgangs an der Ladestation bereitgestellte Energiemenge (Anfangszählerstand) und die bei Beendigung des Ladevorgangs bereitgestellte Energiemenge (Endzählerstand) zu kontrollieren. Überdies kann der Fortschritt des Ladevorgangs dargestellt werden. Insofern existieren Parallelen zwischen der Ladestation und einer Zapfsäule für mineralische Kraftstoffe, an der dem Nutzer die Kraftstoffmenge angezeigt wird. Zur Abrechnung der in den elektrischen Energiespeicher des Fahrzeugs eingespeisten Energiemenge werden der Anfangszählerstand und der Endzählerstand an eine mitunter ortsfern von der Ladestation vorgesehene Servicestation übertragen. In der Servicestation wird auf Basis der Angaben zur Energiemenge und einer an der Ladestation ermittelten Nutzerkennung eine Abrechnung vorbereitet. Beispielsweise erhält der Nutzer eine monatliche Rechnung über die von ihm im Abrechnungszeitraum insgesamt verbrauchte Energie. Der Rechnungsbetrag wird hierbei üblicherweise einem Konto, beispielsweise einem Bankkonto oder einem Mobilfunkkonto des Nutzers belastet. Nachteilig hierbei ist, dass der Nutzer die Rechnung mehrere Tage oder Wochen zeitversetzt zum eigentlichen Ladevorgang erhält und eine Kontrolle der Verbrauchsdaten (Anfangszählerstand, Endzählerstand) aufwendig ist.

Aufgabe der vorliegenden Erfindung ist es daher, ein Verfahren zum Betrieb einer Ladestation anzugeben und eine Ladestation derart weiterzubilden, dass der Abrechnungsvorgang vereinfacht und die Transparenz für den Nutzer verbessert werden.

Zur Lösung der Aufgabe ist die Erfindung in Verbindung mit dem Oberbegriff des Patentanspruchs 1 **dadurch gekennzeichnet, dass** bei Beginn des Ladevorgangs von der Ladestation eine Energiemengenabfragenachricht mit einer Nutzerkennung des Nutzers an eine der Ladestation zugeordnete Servicestation gesendet wird und dann von der Servicestation eine erste Statusnachricht mit der bei Beginn des Ladevorgangs von der Ladestation bereitgestellten Energiemenge (Anfangszählerstand) an den Nutzer gesendet wird.

Der besondere Vorteil des erfindungsgemäßen Verfahrens ist in der einfachen Bedienung der Ladestation durch den Nutzer, der verbesserten Kontrollmöglichkeit und dem hierdurch gesteigerten Vertrauen des Nutzers in die Abrechnung gegeben. Indem der Nutzer von der Servicestation den Anfangszählerstand mitgeteilt bekommt und diese Information mit dem mittels dem Anzeigemodul an der Ladestation selbst angezeigten Wert vergleichen kann, ist einer versehentlichen Falschabrechnung bzw. einem Missbrauch wirksam vorgebeugt. Zugleich kann der Nutzer die Statusnachricht mit dem Anfangszählerstand speichern. Hierdurch ist es dem Nutzer auch zum Zeitpunkt der Abrechnung des Ladevorgangs möglich, die auf der Rechnung aufgeführten Verbrauchsdaten zu kontrollieren. Der Nutzer ist hierbei nicht gezwungen, den Anfangszählerstand vor Beginn des Ladevorgangs manuell abzulesen und zu notieren. Übertragungsfehler werden hierdurch wirksam vermieden.

Im Sinne der Erfindung ist die Zeitangabe "bei Beginn des Ladevorgangs" dahingehend zu verstehen, dass es einen engen zeitlichen Zusammenhang zwischen dem Start des Ladevorgangs und dem Versenden der ersten Statusnachricht gibt. Beispielsweise kann die erste Statusnachricht unmittelbar vor oder nach dem Start des Ladevorgangs versendet werden. Beispielsweise kann vorgesehen sein, dass die erste Statusnachricht vor dem Start des Ladevorgangs an den Nutzer gesendet wird und der Ladevorgang nur gestartet wird, wenn der Nutzer den aktuellen, im Anzeigemodul dargestellten Zählerstand etwa durch Rücksenden der ersten Statusnachricht bestätigt.

Die Identifikationseinheit kann beispielsweise in der Ladestation integriert angeordnet sein. Es kann sich bei der Identifikationseinheit beispielsweise um eine Kartenleseeinheit oder ein Leseeinheit für einen vom Nutzer mitgeführten RFID-Transponder handeln. Beispielsweise kann die Identifikationseinheit ortsfern von der Ladestation, insbesondere in der Servicestation oder in dem über ein Ladekabel mit der Ladestation verbundenen Fahrzeug angeordnet sein. Beispielsweise kommuniziert der Nutzer mit der Identifikationseinheit via Mobilfunk. Als Nutzerkennung zur Identifikation des Nutzers dient beispielsweise eine persönliche Identifikationsnummer (PIN), die ein registrierter Nutzer von dem Betreiber der Ladestation zugewiesen bekommen hat. Beispielsweise dient eine Mobilfunknummer des Nutzers zu seiner Identifikation. Dabei kann der Nutzer selbst eine auf der Ladestation angezeigte Kontakttelefonnummer kontaktieren und sich auf diese Weise mit der Servicestation verbinden. Als Nutzerkennung kann hierbei die vom Nutzer übermittelte Telefonnummer dienen. Ebenso kann jede andere geeignete Nutzerkennung Verwendung finden. Insbesondere können dauerhafte Nutzerkennungen, die einem Nutzer einmalig zugewiesen werden und die dann dauerhaft zur Identifikation des Nutzers verwendet werden, ebenso zum Einsatz kommen wie temporäre, ggf. zur einmaligen Verwendung vorgesehene Nutzerkennungen. Als einmalig verwendete Nutzerkennungen können beispielsweise Transaktionsnummern dienen, die für einen einzigen Ladevorgang gültig sind und geeignet sind, den Ladevorgang eindeutig mit einem identifizierten Nutzer in Zusammenhang zu bringen.

Wie die Identifikationseinheit kann auch die der Steuereinheit zugeordnete Bedieneinheit in der Ladestation integriert oder ortsfern angeordnet sein. Als eine integrierte Bedieneinheit kann beispielsweise ein Bedienfeld mit Eingabetasten vorgesehen sein. Ebenso kann die integrierte Bedieneinheit als eine interne Bedieneinheit ohne mechanische Schnittstellen zum Nutzer ausgebildet sein. Diese interne Bedieneinheit erhält die Signale zum Starten und/oder Beenden des Ladevorgangs beispielsweise von der Identifikationseinheit, der Sendeeinheit oder der Steuereinheit. Eine ortsfern angeordnete, externe Bedieneinheit kann beispielsweise in einer ortsfernen Serviceeinheit vorgesehen sein und ebenfalls auf mechanische Schnittstellen zum Nutzer verzichten. Ebenso kann ein mobiles Datengerät des Nutzers (z. B. Mobiltelefon, Notebook) als Bedieneinheit dienen.

Die Ladestation kann überdies nach Art einer Master-Slave-Anordnung ausgebildet sein, wobei eine Zentralkomponente der Ladestation (Master) vorzugsweise die Steuereinheit und ggf. die Sendeeinheit umfasst und mit wenigstens einer, vorzugsweise zwei oder mehr verteilt angeordneten Komponenten (Slaves) zusammenwirkt. Beispielsweise kann so ein Parkplatz in einfacherweise mit einer Vielzahl von verteilt vorgesehenen Steckdosenmodulen (Slaves) ausgestattet werden, die von einer einzigen Zentralkomponente gesteuert werden. Hierbei ist für jedes Steckdosenmodul ein separates Anzeigemodul vorzusehen, so dass für jedes Steckdosenmodul die Verbrauchsdaten individuell angezeigt und abgelesen werden können. Je ein Anzeigemodul kann beispielsweise dezentral in den Steckdosenmodulen vorgesehen sein. Alternativ kann die Zentralkomponente alle Anzeigemodule aufweisen, so dass die Zählerstände für alle Steckdosenmodule zentral angezeigt und abgelesen werden können. Die Identifikationseinheit kann ebenso wie die Bedieneinheit in den Steckdosenmodulen, der Zentralkomponente oder der ortsfern vorgesehenen Serviceeinheit angeordnet werden. Überdies kann die Zentralkomponente die Aufgaben der Serviceeinheit mit übernehmen und auf das Vorsehen einer ortsfernen Servicestation verzichtet werden. Beispielsweise können Anzeigemodule der einzelnen Steckdosenmodule zusammengefasst in der Zentralkomponente oder dezentral in den jeweiligen Slaves angeordnet sein.

Beispielsweise kann auf die Servicestation als separate Bau- bzw. Funktionsstation verzichtet werden. Die Ladestation selbst- bzw. bei einer Master-Slave-Anordnung deren Zentralkomponente (Master) - kann die Aufgaben der Servicestation mit übernehmen, so dass eine integrierte Lade- und Servicestation vorgesehen ist.

Nach einer bevorzugten Ausführungsform der Erfindung wird bei Beendigung des Ladevorgangs der Endzählerstand an die Servicestation übertragen und von der Servicestation eine zweite Statusnachricht mit dem Endzählerstand an den Nutzer übertragen. Vorteilhaft ist hierdurch auch der Endzählerstand dokumentiert. Der Nutzer gewinnt zusätzliches Vertrauen, da er beim Trennen des Fahrzeugs von der Ladestation in einfacher Weise den ihm übermittelten Wert und den an der Ladestation angezeigten Wert vergleichen kann. Zudem kann auch die zweite Statusnachricht mit dem Endzählerstand in einfacher Weise gespeichert werden. Der Nutzer ist hierdurch in der Lage, sich zum Zeitpunkt der Rechnungskontrolle den früheren Ladevorgang in Erinnerung zu rufen.

Nach einer Weiterbildung der Erfindung wird eine von dem Nutzer zu zahlende Ladegebühr auf Basis des in der ersten Statusnachricht übermittelten Anfangszählerstands und des in der zweiten Statusnachricht übermittelten Endzählerstands bestimmt. Vorteilhaft kann die Energiemenge aus der Differenz des Zählerstands exakt ermittelt und der Ladevorgang exakt abgerechnet werden. Beispielsweise können der Anfangszählerstand und der Endzählerstand mit Hilfe einer geeichten Energieerfassungseinheit ermittelt werden.

Beispielsweise kann vorgesehen sein, dass der Nutzer mit der zweiten Statusnachricht bereits den voraussichtlichen Rechnungsbetrag mitgeteilt bekommt. Dies ist bei Abrechnung auf Basis des Anfangszählerstands und des Endzählerstands insbesondere möglich, wenn ausschließlich diese Werte und ein bekannter Kilowattstundenpreis der Abrechnung zugrunde liegen.

Optional kann beispielsweise anlässlich eines Tarifwechsels (Erhöhung bzw. Senkung des Strompreises) wenigstens eine weitere Statusnachricht mit wenigstens einem Zwischenzählerstand in analoger Weise generiert und über die Serviceeinheit an den Nutzer gesendet werden. Der Zwischenzählerstand kann dann ebenfalls zur Bestimmung der zu zahlenden Ladegebühr dienen.

Zur Lösung der Aufgabe ist die Erfindung in Verbindung mit dem Oberbegriff des Patentanspruchs 9 **dadurch gekennzeichnet, dass** die Steuereinheit derart ausgebildet ist, dass die Steuereinheit nach Empfang eines Initialisierungssignals für den Ladevorgang von der Bedieneinheit die von der Identifikationseinheit erkannte Nutzerkennung an die Sendeeinheit überträgt und über die Sendeeinheit die Nutzerkennung und eine Energiemengenabfragenachricht an die Servicestation sendet.

Der besondere Vorteil der Erfindung besteht darin, dass der Servicestation eine zur Identifikation des Nutzers erforderliche Nutzerkennung zur Verfügung gestellt wird und der so identifizierte Nutzer von der Servicestation über den Anfangszählerstand beim Start des Ladevorgangs in Kenntnis gesetzt wird. Beispielsweise kann als Nutzerkennung eine Mobilfunknummer des Nutzers von der Ladestation an die Servicestation übertragen und die Information zum Anfangszählerstand von der Servicestation an die übertragene Mobilfunknummer per SMS gesendet werden. Beispielsweise kann eine Nutzer-ID von der Identifikationseinheit der Ladestation erkannt und an die Servicestation übertragen werden. Für registrierte Nutzer kann anhand der Nutzer-ID eine Mobilfunknummer bzw. E-Mail-Adresse ermittelt und der Anfangszählerstand per SMS an die Mobilfunknummer oder per E-Mail an die E-Mail-Adresse des Nutzers gesendet werden.

Nach einer bevorzugten Ausführungsform der Erfindung ist die Steuereinheit derart ausgebildet, dass nach Anlage eines Beendigungssignals für den Ladevorgang von der Bedieneinheit die Steuereinheit den Ladevorgang unterbricht, die bisher bereitgestellte Energiemenge (Endzählerstand) von der Energieerfassungseinheit abfragt und über die Sendeeinheit an eine Servicestation überträgt. Die Servicestation kann dem Nutzer dann den Endzählerstand übertragen. Der so übermittelte und an den Nutzer übertragene Endzählerstand kann als Anfangszählerstand für den nächsten Ladevorgang dienen. In diesem Fall ist die Übertragung des Anfangszählerstands zu Beginn des Ladevorgangs von der Ladestation an die Servicestation nicht erforderlich. Alternativ kann bei Beginn des Ladevorgangs, etwa in der Energiemengenabfragenachricht, der Anfangszählerstand von der Steuereinheit bei der Energieerfassungseinheit ermittelt und über die Sendeeinheit an die Servicestation übertragen werden. Vorteilhaft ist die Ladestation hierdurch in der Lage, die zur Abrechnung relevanten Verbrauchsdaten (Anfangszählerstand, Endzählerstand) in einfacher Weise zuverlässig an die Servicestation bereitzustellen. An der Servicestation kann auf Basis der Verbrauchsdaten beispielsweise die Rechnung erstellt werden. Überdies kann der Nutzer zeitnah bei Beginn bzw. Beendigung des Ladevorgangs über den Anfangszählerstand und den Endzählerstand unterrichtet werden.

Das Beendigungssignal kann beispielsweise von dem Nutzer erzeugt werden, der sein Fahrzeug von der Ladestation trennen will. Beispielsweise kann das Beendigungssignal selbsttätig erzeugt werden, wenn ein Energiespeicher des Fahrzeugs vollständig geladen ist und der Ladevorgang aus diesem Grund beendet wird. Beispielsweise kann ein Beendigungssignal erzeugt werden, wenn der Ladevorgang aufgrund einer Fehlfunktion der Ladestation oder eines anderen, ungewöhnlichen Betriebszustands unterbrochen wird.

Nach einer Weiterbildung der Erfindung ist die Energieerfassungseinheit eine geeichte Energieerfassungseinheit. Vorteilhaft können geeichte Energieerfassungseinheiten dazu dienen, den mit ihnen ermittelten Zählerstand als Grundlage für eine Abrechnung der Energiemenge gegenüber dem Kunden zu nutzen. Eine Abrechnung auf Basis der Energiemenge ist besonders exakt und transparent.

Nach einer Weiterbildung der Erfindung ist das Anzeigemodul in die Energieerfassungseinheit integriert bzw. das Anzeigemodul von außen sichtbar in der Ladestation angeordnet. Beispielsweise kann die Ladestation ein Gehäuse mit einem Fenster oder einer anderen transparenten Ausnehmung aufweisen. Durch das Fenster bzw. die andere transparente Ausnehmung hindurch kann der Nutzer das Anzeigemodul der Energieerfassungseinheit einsehen und so den Anfangszählerstand bzw. den Endzählerstand bzw. jeden belieben Zwischenwert ermitteln. Vorteilhaft kann der Nutzer hierdurch die ihm von der Servicestation zur Verfügung gestellten Zählerdaten (Anfangszählerstand, Endzählerstand) mit den tatsächlichen Werten an der Ladestation vergleichen. Das Vertrauen des Nutzers in die Abrechnung steigt hierdurch weiter.

Es kann ferner vorgesehen sein, weitere Statusnachrichten an den Nutzer zu senden. Beispielsweise kann eine Statusnachricht den Nutzer über einen bevorstehenden bzw. durchgeführten Tarifwechsel informieren. Mit der Nachricht über den Tarifwechsel kann dem Nutzer insbesondere auch der Zählerstand zum Zeitpunkt des Tarifwechsels mitgeteilt werden.

Im Rahmen der Erfindung kann ein Statusnachrichtenversand oder ein anderer Datenaustausch durch aktives Senden oder alternativ durch passives Senden (insb. Abfragen) realisiert werden.

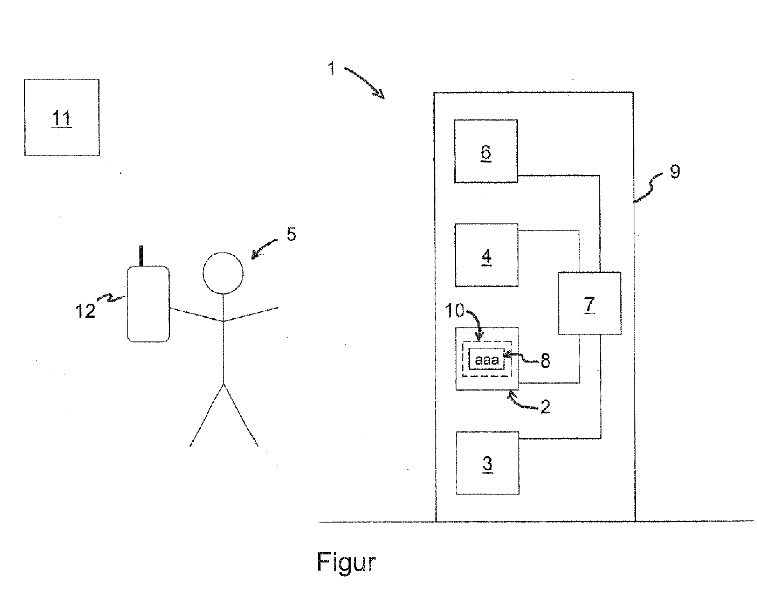

Nachfolgend wird ein Ausführungsbeispiel der Erfindung anhand der Figur näher erläutert.

Eine Ladestation 1 weist als wesentliche Komponenten eine Energieerfassungseinheit 2 zur Ermittlung einer über die Ladestation 1 bereitgestellten Energiemenge, eine integrierte Bedieneinheit 3 zum Starten bzw. Beenden eines Ladevorgangs, eine ebenfalls integrierte Identifikationseinheit 4 zur Identifikation eines Nutzers 5, eine Sendeeinheit 6 zum Senden von Nachrichten sowie eine mit der Energieerfassungseinheit 2, der Bedieneinheit 3, der Identifikationseinheit 4 und der Sendeeinheit 6 zusammenwirkenden Steuereinheit 7 auf. Die Energieerfassungseinheit 2 umfasst ein Anzeigemodul 8. Das Anzeigemodul 8 ist so ausgebildet, dass die bisher von der Ladestation 1 bereitgestellte Energiemenge angezeigt werden kann. Der Nutzer 5 kann die bisher bereitgestellte Energiemenge (Zählerstand) des Anzeigemoduls 8 durch ein in einem Gehäuse 9 der Ladestation vorgesehenes Fenster 10 ablesen.

Allein aus Gründen der Klarheit ist auf die Darstellung weiterer Komponenten der Ladestation 1, insbesondere elektrische Leitungskomponenten bzw. elektrische Kontaktkomponenten zum Verbinden der Ladestation mit einem Fahrzeug des Nutzers 5, verzichtet worden. Selbstverständlich umfasst die erfindungsgemäße Ladestation 1 alle zur ordnungsgemäßen Durchführung des Ladevorgangs notwendigen elektrischen und mechanischen Komponenten.

Die Sendeeinheit 6 ist so ausgebildet, dass Informationen von der Ladestation 1 über die Sendeeinheit 6 an eine ortsfeste Servicestation 11 übertragen werden können. Die ortsfeste Servicestation 11 umfasst insofern eine nicht dargestellte Empfangseinheit für Informationen der Ladestation 1. Zusätzlich weist die Servicestation 11 eine ebenfalls nicht dargestellte Sendeeinheit auf. Über die Sendeeinheit der Ladestation 11 können Nachrichten beispielsweise an ein Mobiltelefon 12 des Nutzers 5 gesendet werden. Will der Nutzer 5 einen Energiespeicher seines Fahrzeugs laden, wird der Nutzer 5 von der Identifikationseinheit erkannt und identifiziert. Die Identifikation kann beispielsweise durch Eingabe einer persönlichen Kennung (PIN) des Nutzers 5 erfolgen. Zur Eingabe kann der Nutzer 5 die Bedieneinheit 3 verwenden, die zu diesem Zweck ein nicht dargestelltes Nummernfeld aufweisen kann. Beispielsweise kann der Nutzer 5 von der Identifikationseinheit 4 berührungslos erkannt werden, indem beim Annähern an die Ladestation 1 ein von dem Nutzer 5 mitgeführter RFID-Chip erkannt und ausgelesen wird.

Über die Bedieneinheit 3 wird dann der Ladevorgang initiiert. Beispielsweise können das Initialisierungssignal und/oder ein Beendigungssignal über mechanische Eingabemittel der Bedieneinheit 3 erzeugt werden. Beispielsweise kann die Bedieneinheit 3 vom Nutzer 5 ausgehende elektrische Signale empfangen, die ihrerseits selbsttätig das Initialisierungs- bzw. Beendigungssignal erzeugen. Beispielsweise können diese elektrischen Signale mittels eines RFID-Transponders erzeugt oder bei der Herstellung einer elektrisch leitenden Verbindung zwischen Ladestation 1 und Fahrzeug generiert werden.

Die Steuereinheit 7 dient der Durchführung und Koordination des Ladevorgangs. Die Steuereinheit 7 veranlasst, dass eine von der Identifikationseinheit 4 ermittelte Nutzerkennung über die Sendeeinheit 6 an die Servicestation 11 übertragen wird. Die Servicestation 11 sendet daraufhin eine Nachricht auf das Mobiltelefon 12 des Nutzers 5. Die Nachricht ist als eine Statusnachricht ausgebildet und enthält Informationen über die zum Zeitpunkt des Starts des Ladevorgangs über die Ladestation 1 bisher bereitgestellte Energiemenge (Anfangszählerstand). Der Nutzer 5 kann nach Erhalt der Nachricht den ihm von der Servicestation 11 übermittelten Anfangszählerstand mit dem auf dem Anzeigemodul 8 der Energieerfassungseinheit 2 angezeigten Zählerstand vergleichen. Sollten die Zahlenwerte voneinander abweichen, kann der Nutzer den Ladevorgang abbrechen oder eine Nachricht an den Betreiber der Ladestation 1 und/oder an die Servicestation 11 senden.

Nach Beendigung des Ladevorgangs wird die dann über die Ladestation 1 bereitgestellte Energiemenge (Endzählerstand) von der Steuereinheit 7 ermittelt und über die Sendeeinheit 6 der Servicestation 11 mitgeteilt. Die Servicestation 11 sendet hierauf eine zweite Statusnachricht mit dem Endzählerstand auf das Mobiltelefon 12 des Nutzers 5. Der Nutzer 5 hat dann beim bzw. unmittelbar nach dem Trennen des Fahrzeugs von der Ladestation 1 die Möglichkeit, den auf sein Mobiltelefon 12 übermittelten Endzählerstand mit dem an dem Anzeigemodul 8 der Energieerfassungseinheit 2 angezeigten Zählerstand zu vergleichen.

Lediglich exemplarisch ist das Verfahren unter Verwendung des Mobiltelefons 12 dargestellt worden. Beispielsweise kann der Nutzer 5 statt einer Textnachricht (SMS) auf sein Handy jede andere dauerhafte Benachrichtigung als erste bzw. zweite Statusnachricht erhalten. Beispielsweise können eine Sprachnachricht auf einer Mobilbox des Nutzers 5 hinterlassen oder eine E-Mail an den Nutzer 5 gesendet werden. Die E-Mail kann der Nutzer beispielsweise über ein mitgeführtes mobiles Endgerät, insbesondere ein Smartphone oder ein Notebook, vor Ort empfangen bzw. öffnen.

In den Statusnachrichten kann der Nutzer 5 zusätzlich zum Zählerstand (Anfangszählerstand, Endzählerstand) weitere für den Ladevorgang relevante Daten erhalten. Beispielsweise können eine Identifikationsnummer der Ladestation 1 bzw. des Zählers (Energieerfassungseinheit 2), eine Zugangsnummer für über eine Portalseite des Betreibers einsehbare, auf den Ladevorgang bezogene Zusatzinformationen, der Standort der Ladestation 1, das Datum des Ladevorgangs oder die aktuelle Uhrzeit mitgeteilt werden. Mittels der Zugangsnummer kann als Ladevorgang bezogene Zusatzinformation beispielsweise eine Onlinequittung bereitgestellt werden. Für den Nutzer 5 wird die Kontrolle der Rechnung anhand der Statusnachricht hierdurch weiter vereinfacht. Die Onlinequittung erleichtert beispielsweise nicht registrierten Nutzern, bei denen der Ladevorgang über ein Mobilfunkkonto oder dergleichen abgerechnet wird, die Kontrolle des Ladevorgangs.

Die Konfiguration mit einer Ladestation 1 und einer ortsfern hierzu angeordneten Servicestation 11 ist lediglich exemplarisch gewählt. Die Servicestation 11 kann ebenso in die Ladestation 1 integriert angeordnet sein. Ferner kann eine Master-Slave-Anordnung mit einer Zentralkomponenten (Master) und einer oder mehrerer Steckdosenmodule (Slave) vorgesehen werden.

## Patentansprüche

1. Verfahren zum Betreiben einer elektrische Energie für elektrisch betreibbare Fahrzeuge bereitstellenden Ladestation (1), wobei zur Abrechnung eines Ladevorgangs gegenüber einem Nutzer (5) der Ladestation (1) eine mit Hilfe einer Energieerfassungseinheit (2) ermittelte, zu Beginn des Ladevorgangs an der Ladestation (1) bisher bereitgestellte und über ein Anzeigemodul (8) der Energieerfassungseinheit (2) angezeigte erste Energiemenge (Anfangszählerstand) und eine bei Beendigung des Ladevorgangs an der Ladestation (1) insgesamt bereitgestellte, in analoger Weise ermittelte und angezeigte zweite Energiemenge (Endzählerstand) in Anrechnung gebracht werden, **dadurch gekennzeichnet, dass** bei Beginn des Ladevorgangs von der Ladestation (1) eine Energiemengenabfragenachricht mit einer Nutzerkennung des Nutzers (5) an eine der Ladestation (1) zugeordnete Servicestation (11) gesendet wird und dann von der Servicestation (11) eine erste Statusnachricht mit der bei Beginn des Ladevorgangs von der Ladestation (1) bereitgestellten Energiemenge (Anfangszählerstand) an den Nutzer (5) gesendet wird.

2. Verfahren nach Anspruch 1, **dadurch gekennzeichnet, dass** bei und/oder nach der Beendigung des Ladevorgangs die dann bereitgestellte Energiemenge (Endzählerstand) von der Ladestation (1) an die Servicestation (11) übertragen wird und von der Servicestation (11) eine zweite Statusnachricht mit der bei Beendigung des Ladevorgangs ermittelten Energiemenge (Endzählerstand) an den Nutzer (5) gesendet wird.

3. Verfahren nach Anspruch 1 oder 2, **dadurch gekennzeichnet, dass** während des Ladevorgangs anlässlich eines Tarifwechsels wenigstens eine dritte Energiemenge (Zwischenzählerstand) von der Ladestation (1) an die Servicestation (11) übertragen wird und von der Servicestation (11) wenigstens eine weitere Statusnachricht mit dem Zwischenzählerstand an den Nutzer (5) gesendet wird.

4. Verfahren nach einem der Ansprüche 1 bis 3, **dadurch gekennzeichnet, dass** eine von dem Nutzer (5) für den Ladevorgang zu zahlende Ladegebühr auf Basis des in der ersten Statusnachricht übermittelten Anfangszählerstands und des in der zweiten Statusnachricht übermittelten Endzählerstands berechnet wird und/oder dass die Ladegebühr zusätzlich auf Basis des mit der wenigstens einen weiteren Statusnachricht übermittelten Zwischenzählerstands berechnet wird.

5. Verfahren nach einem der Ansprüche 1 bis 4, **dadurch gekennzeichnet, dass** mit dem Zählerstand (Anfangszählerstand, Endzählerstand) aktuelle Standortdaten der Ladestation (1) und/oder eine dem Ladevorgang zugeordnete Datumsangabe und/oder eine dem Ladevorgang zugeordnete Zeitangabe und/oder eine Identifikationsnummer der Ladestation (1) und/oder eine Identifikationsnummer der Energieerfassungseinheit (2) und/oder eine Zugangsnummer für über eine im Internet bereitgehaltene Portalseite des Betreibers einsehbare, auf den Ladevorgang bezogene Zusatzinformationen an den Nutzer (5) übertragen werden.

6. Verfahren nach einem der Ansprüche 1 bis 5, **dadurch gekennzeichnet, dass** die erste Statusnachricht und/oder die zweite Statusnachricht als Textnachrichten auf ein mobiles Datenendgerät (Mobiltelefon 12) des Nutzers (5) übertragen werden.

7. Verfahren nach einem der Ansprüche 1 bis 6, **dadurch gekennzeichnet, dass** der Ladevorgang nach dem Versenden der ersten Statusnachricht an den Nutzer nur gestartet wird, falls der Nutzer den Zählerstand der ersten Statusnachricht bestätigt.

8. Verfahren nach einem der Ansprüche 1 bis 7, **dadurch gekennzeichnet, dass** der Nutzer nach Übersenden der zweiten Statusmeldung den übermittelten Endzählerstand und/oder nach Übersenden einer anlässlich eines Tarifwechsels gesendeten weiteren Statusnachricht den übermittelten Zwischenzählerstand bestätigt.

9. Ladestation (1) zur Bereitstellung elektrischer Energie für elektrisch betreibbare Fahrzeuge enthaltend eine Energieerfassungseinheit (2) zum Erfassen einer bisher über die Ladestation bereitgestellten Energiemenge mit einem Anzeigemodul (8) zur Anzeige der bisher bereitgestellten Energiemenge, enthaltend eine Sendeeinheit (6) zum Senden von Daten an eine Servicestation (11) und enthaltend eine mit der Energieerfassungseinheit (2) und der Sendeeinheit (11) zusammenwirkende Steuereinheit (7) zum Durchführen und Koordinieren des Ladevorgangs, wobei der Steuereinheit (7) weiter eine Identifikationseinheit (4) zum Identifizieren eines Nutzers (5) der Ladestation (1) anhand einer Nutzerkennung und eine Bedieneinheit (3) zum Starten und/oder Beenden eines Ladevorgangs zugeordnet sind, **dadurch gekennzeichnet, dass** die Steuereinheit (7) derart ausgebildet ist, dass die Steuereinheit (7) nach Empfang eines Initialisierungssignals für den Ladevorgang von der Bedieneinheit (3) die von der Identifikationseinheit (4) erkannte Nutzerkennung an die Sendeeinheit (6) überträgt und über die Sendeeinheit (6) die Nutzerkennung und eine Energiemengenabfragenachricht an die Servicestation (11) sendet.

10. Ladestation nach Anspruch 9, **dadurch gekennzeichnet, dass** die Steuereinheit (7) derart ausgebildet ist, dass nach Empfang eines Beendigungssignals für den Ladevorgang von der Bedieneinheit (3) die Steuereinheit (7) den Ladevorgang beendet, die bisher bereitgestellte Energiemenge (Endzählerstand) von der Energieerfassungseinheit (2) abfragt und über die Sendeeinheit (6) an die Servicestation (11) überträgt.

11. Ladestation nach einem der Ansprüche 9 oder 10, **dadurch gekennzeichnet, dass** das Anzeigemodul (8) in die Energieerfassungseinheit (2) integriert ist und/oder dass das Anzeigemodul (8) von außen sichtbar in der Ladestation (1) angeordnet ist und/oder dass die Energieerfassungseinheit (2) eine geeichte Energieerfassungseinheit (2) ist.

12. Verwendung einer Ladestation (1) nach einem der Ansprüche 9 bis 11 zur Abrechnung der in ein Fahrzeug eingespeisten Energiemenge nach einem Verfahren gemäß wenigstens einem der Ansprüche 1 bis 8.
